Europäisches Patentamt

**European Patent Office**

Office européen des brevets

(19)

(11) Publication number: **0 024 177**

**A1**

(12)

# EUROPEAN PATENT APPLICATION

(21) Application number: **80302730.9**

(22) Date of filing: **08.08.80**

(51) Int. Cl.³: **F 24 J 3/02**
**G 02 B 5/10**

(30) Priority: **08.08.79 US 64829**

(43) Date of publication of application:
**25.02.81 Bulletin 81/8**

(84) Designated Contracting States:
**DE FR GB IT**

(71) Applicant: **Parkin, Robert E.**
**20 Bogastow Brook Road**
**Sherborn Massachusetts 01770(US)**

(72) Inventor: **Parkin, Robert E.**
**20 Bogastow Brook Road**
**Sherborn Massachusetts 01770(US)**

(74) Representative: **Brunner, Michael John et al,**
**Gill Jennings & Every 53 to 64, Chancery Lane**
**London WC2A 1HN(GB)**

(54) **Radiant energy focusing apparatus.**

(57) For concentrating radiant solar energy a reflecting surface (6) that is orientable is provided, the reflector (6) directing the radiant energy to a collector (22) which has a fixed position. The reflector (6) is fixed at one end (12) and moves about an arc at the other end (19) so that the mechanism is simple and can be inexpensively fabricated.

EP 0 024 177 A1

FIG. 10

— 1 —

PARKIN, Robert E.                    GJE 5180/111
              RADIANT ENERGY FOCUSING APPARATUS

The present invention relates generally to apparatus for the collection of radiant energy from solar sources.

A particular type of solar collector system uses a cylindrical reflector to concentrate the solar energy to a collector area. Such cylindrical reflectors can have a variety of cross sectional profiles, and may be orientable or may be fixed. The ideal orientable reflector has a parabolic cross section, but the orienting mechanism is complex and expensive. Fixed reflectors may take several forms, and the best known include the compound parabolic concentrator (see U.S. Patent Specifications Nos. 3,923,381, 3,957,031, 4,134,392, 4,002,499, 4,129,115, 4,130,106); reflectors using parabolic reflectors and a dispersed collector area (see U.S. Patent Specifications Nos. 4,003,366, 4,015,585, 3,991,740) and a variety of other shapes (see U.S. Patent Specifications Nos. 3,310,102, 4,148,299, 4,099,516, 4,153,042, 4,142,514, 4,022,188 , 4,032,219). All fixed orientation reflector systems have the problem that the higher the concentration factor obtained the smaller the acceptable range of angles of incident radiation ( the acceptance angle) and although improvement can be effected by seasonal adjustments

- 2 -

in orientation, this is at the cost of complex machinery.

It is an object of this invention to provide an orientable reflector system that focuses solar energy on a fixed target area to provide a high concentration factor.

According to the present invention radiant energy focusing apparatus comprising a reflector having a curved cross-section for focusing incident radiant energy upon an elongate radiant energy collecting region, is characterized in that one edge of the reflector is fixedly supported relative to the collecting region, and the other edge of the reflector is supported for movement about an axis substantially parallel to the collecting region, for focusing radiant energy from a remote radiant energy source on the collecting region as the relative angular orientation of the remote radiant energy source about the axis changes.

Preferably the reflector is a flexible metallic or metallic faced sheet and is parabolic in shape at a chosen orientation, and semi-parabolic at all other orientations. With the parabolic-semiparabolic embodiments the locus of the other end describes a circle. Thus only one end of the reflector needs to be oriented, and all other parts of the solar collection system remain fixed, resulting in simplicity of installation and low material cost. The concentration factors obtainable are in the range 10 to 30 or higher and the apparatus is suitable for use in most latitudes outside the tropics.

Examples of the prior art and of the invention, will now be described with reference to the accompanying drawings in which:-

Figures 1-4 show transverse cross sections of well known radiant energy concentrating systems using reflective side walls;

Figure 5 shows part of two parabolic concentrators with reflective side walls for concentrating parallel rays of incident radiant energy on the target point;

Figure 6 shows two parabolic concentrators with a common starting point for focusing incident radiation at two distinct angles on a common focus point;

Figure 7 shows three parabolic concentrators of the same length that have a common end point, focus to a common focal point, and whose other end points describe a circular arc with centre $(p,q)$;

Figure 8 shows the loci of pivot point $(p, q)$;

Figure 9 shows diagrammatically a practical embodiment of the concentrating collector system; and,

Figure 10 is a perspective view of the practical embodiment of Figure 9.

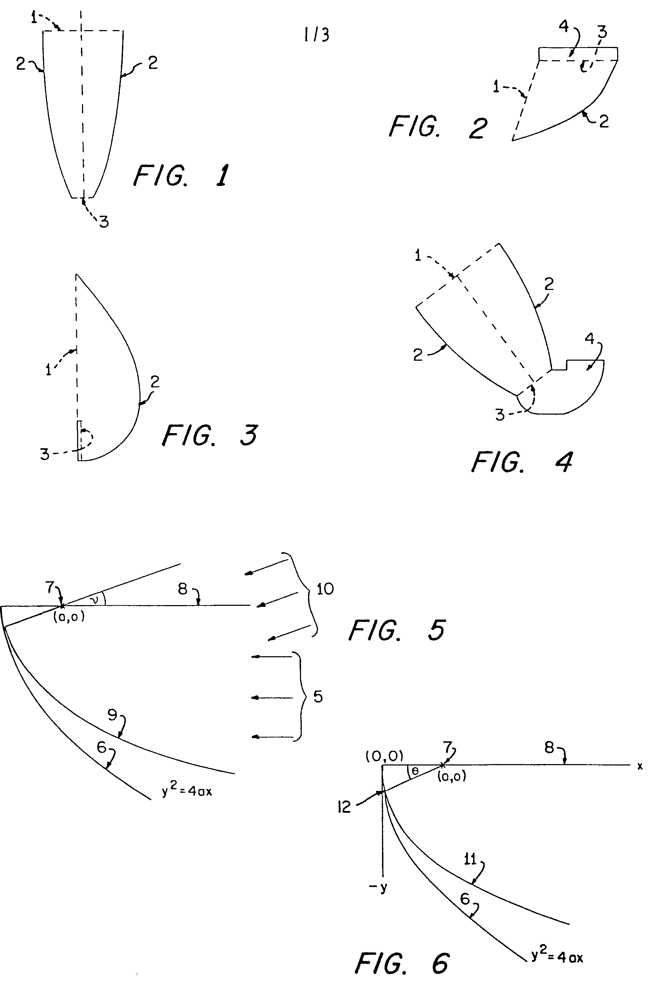

The invention described herein has similarities to the incident radiation concentrators shown in FIG. 1 (U. S. Patent No. 3,923,381), FIG. 2 (Patent No. 4,022,188), FIG. 3 (Patent No. 3,923,039) and FIG. 4 (Patent No. 3,986,490). All have an entrance aperture 1, one or more cylindrical reflectors 2, and an exit aperture or collection area 3 that is smaller in area than the entrance aperture. The devices of FIG. 4 further direct the incident radiation to a horizontal pocket 4 for energy collection. The device of FIG. 2 also has a horizontal collection pocket. The purpose of the horizontal collection pocket is to reduce the energy lost by convection and conduction.

A cylindrical reflector of parabolic cross section is capable of focusing parallel beams of electromagnetic energy on a focus line. At the earth's distance from the sun the light rays can be considered parallel. Considering a cross-sectional profile, if the incident radiation 5 is horizontal, the half parabolic reflector 6 shown in FIG. 5 will focus the incident radiation to focus point 7. Such a parabolic reflector can be mathematically described by $y^2 = 4ax$, where the focus point 7 is at (a, 0) along its principal axis 8. Also shown in FIG. 5 is another parabolic reflector 9 for focusing incident radiant energy 10 at positive angle $\nu$ to the horizontal onto the same focus point 7. Parabolic reflector 9 has the same shape as reflector 6 but is rotated by positive angle $\nu$. Thus, to focus parallel beams of incident radiation at more than one incident angle to a focal point with a parabolic reflector requires rotation of the parabolic reflector about its focal point. However, as shown in FIG. 6, another parabolic reflector 11 can also concentrate incident radiation at angle $\nu$ to the original focus point 7 in such a way that reflectors 6 and 11 coincide at point 12 at angle $\theta$ to the principal axis 8. Parabolic reflector 6 has focal length 'a'. The focal length of parabolic reflector 11 is not 'a'. In this way a family of parabolic reflectors can be devised for all possible angles of incident radiation and all passing through point 12.

For a function $x = f(y)$, the length between points $y_1$ and $y_2$ is

$$L = \int_{y_1}^{y_2} \left[ 1 + \frac{dx}{dy}^2 \right]^{1/2} dy .$$

For $\quad x = \frac{y^2}{4a}$,

$$L = a \left[ \frac{\sin \phi}{\cos^2 \phi} \right]_{\phi_1}^{\phi_2} + \frac{a}{2} \left[ \ln \frac{1 + \sin \phi}{1 - \sin \phi} \right]_{\phi_1}^{\phi_2}$$

where $\quad \phi_1 = \tan^{-1} \frac{y_1}{2a}$ and $\phi_2 = \tan^{-1} \frac{y_2}{2a}$ .

If the starting point $(x_1, y_1)$ is at angle $\theta$ as shown in FIG. 6,

$$y_1 = - \frac{2a}{\sin \theta} (1 - \cos \theta).$$

If the parabolic reflector 11 is rotated by angle $\nu$ such that its principal axis coincides with the principal axis of reflector 6, this new parabola can be described by

$$y^2 = 4a_\nu (x - a - a_\nu)$$

for $\quad x \geq a - a_\nu$

and $\quad a_\nu = a \left[ \frac{1 + \cos(\theta - \nu)}{1 + \cos \theta} \right].$

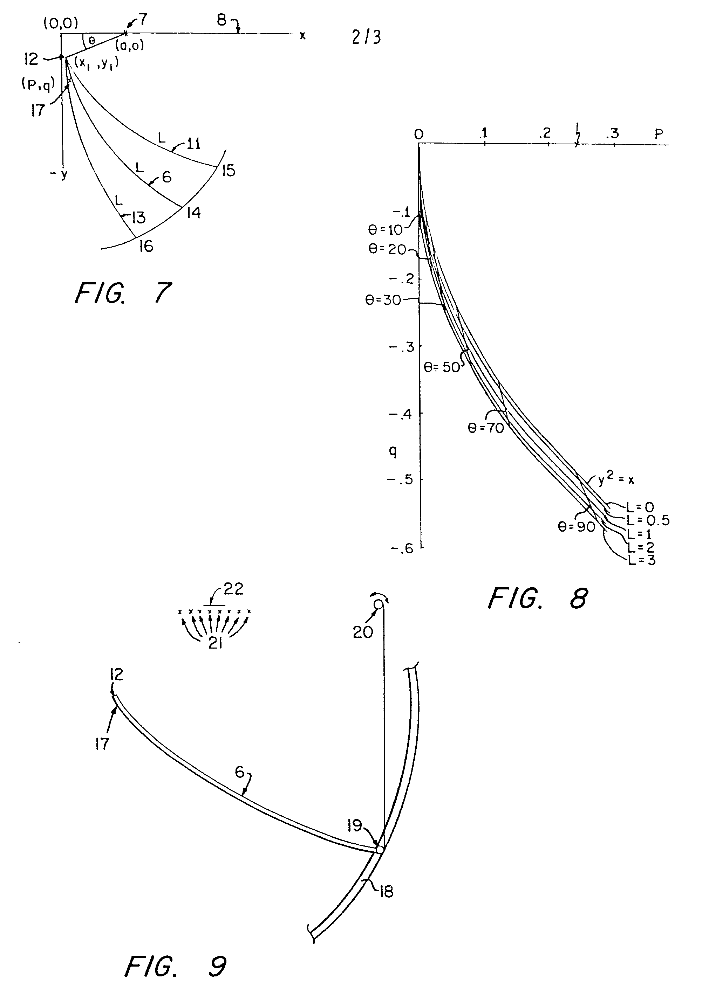

Similar equations can be found for a parabola with principal axis at angle $-\nu$ to the parabola $y^2 = 4ax$. The three paraboli 6, 11 and the new parabola 13 are shown in FIG. 7. The lengths L along each parabola are the same, giving three end points 14, 15 and 16. These three points can be considered to be on the circumference of a circle with center 17 at $(p, q)$. Since $(p, q)$ is a function of L, $\theta$

and $\nu$, it can be written $p(L,\theta,\nu)$, $q(L,\theta,\nu)$. Numeric solutions for this center point indicate

$$\frac{\partial}{\partial\nu}\,[p(L,\theta,\nu),\ q(L,\theta,\nu)] = 0$$

and

$$\lim_{L\to 0} p(L,\theta\ \nu),\ q(L,\theta,\nu) = [x_1,\ y_1].$$

The first result is significant since it indicates that the arc of end points of the paraboli for all $\nu$ is circular. The second result is to be expected. FIG. 8 shows the location of p and q as a function of $\theta$ and L; without loss of generality it has been assumed that a = 0.25. Recall that the pivot point for paraboli shown in FIG. 5 is the point (a, o). For the paraboli with common starting point $(x_1, y_1)$ the pivot point is close to $(x_1, y_1)$.

For simplicity the mathematics has been described with respect to a central parabola $y^2 = 4ax$, which will focus horizontal incident radiation. In practice, solar collection is always performed at a positive angle. For example, the maximum elevation of the sun for latitude 42° is 24.55° during winter solstice and 71.45° during summer solstice. At equinox the maximum elevation of the sun is 48.00°. In all cases the maximum elevation occurs at solar noon when the azimuth of the sun is due south. For latitude 42° it would be advisable to make the middle parabola have principal axis at positive angle in the range 15° - 25°. The actual pivot point is found by rotating point (p, q) by angle $\psi$.

The middle parabolic reflector 6 is preferably constructed of flexible metal or metallized plastic. Angle $\bar{\theta} = \theta - \nu$ between the principal axis and a line from the focal point and the fixed end of the reflector is chosen to suit the target location, i.e. the focal point. Typically $\bar{\theta}$ is made larger than the maximum winter elevation of the sun so that shading of the reflector by the target area does not occur. The length L of the reflector is chosen as large as possible consistent with satisfactory energy collection at the target area. With $\bar{\theta}$, $\psi$ and L chosen, the pivot point for the moveable end of the reflector is known. Notice that for all positions but the middle position the flexible reflector will no longer be exactly parabolic, and focusing will not be exactly to a point. Further, to achieve the ideal parabolic shape in the middle location is very difficult in practice. Therefore the focal point becomes a diffuse area, but nevertheless embraceable by a practical collector.

A practical embodiment for $\psi = 30$, $\theta = 40$, $L = 0.74$ with a = 0.25 is shown in FIG. 9; this can be scaled as desired and one physical implementation with these numbers has L = 8'0". The mechanism to maintain the circular arc 18 can either be a track of circular arc 18 to which the longitudinal bar 19 is connected by runners, or a pivot arm from pivot point 17 to the longitudinal bar 19. The longitudinal bar 19 is pulled upwards by one or more strings, chains or wires wrapped around a rotatable device 20. Gravity will pull the longitudinal bar 19 downwards as required. Rotatable device 20 is controlled by a small reversible slow speed motor which is controlled by an array of sensors 21 in front of the target 22. When the reflector is in the correct position for the sun's elevation the output from the sensors balance, and there is no input to the motor. When the sun's elevation changes the outputs from the sensors make the motor shaft rotate, to rotate device 20 and move longitudinal bar 19 and reflector 6, until the sensors are once more balanced.

Although the target area 22 is shown to be horizontal and flat in FIG. 9, it can be at an angle, curved, or may be composed of a series of pipes. It can occupy almost any position above the reflector and in fact can touch the fixed end 12. There are advantages to having the target area in a horizontal pocket however, since this reduces heat loss by conduction and convection from the collector or collectors when the sun's energy heats the collector or collectors in the target area. A glazing cover may or may not be desirable over the target area. A glazing cover outside the arc 18 is desirable, and

- 8 -

can be attached to the track of circular arc 18 if such a track is used. By glazing the sense used here is meant a layer of clear glass, clear plastic or some such similar material that permits the transmission of the bulk of the sun's energy.

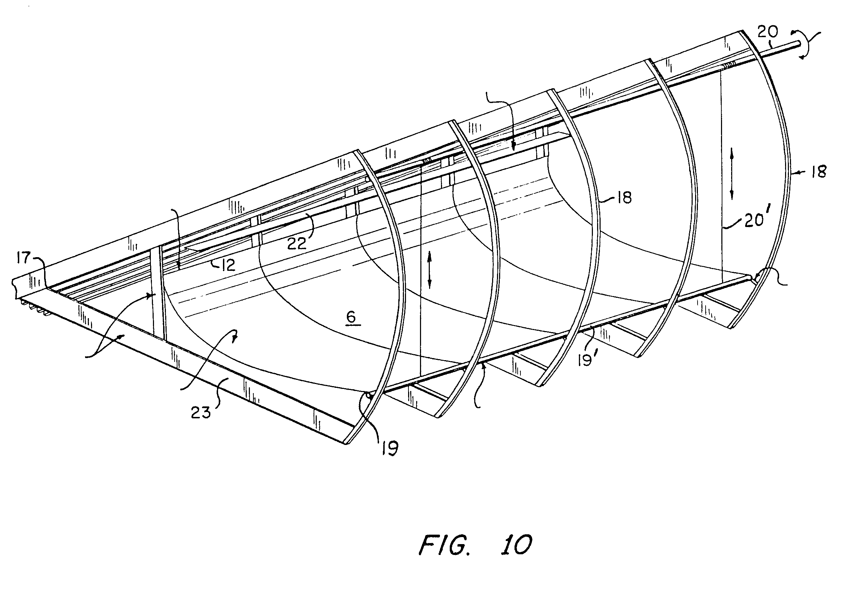

Referring to Figure 10, there is shown a perspective view of the practical embodiment of Figure 9 in relation to a house frame 23, but with detectors 21 omitted to avoid obscuring structural details. The fixed end 12 of reflecting sheet 6 may be secured to house frame 23 as shown the movable end 19 to a rod 19'   connected to glazing frame 18 so that rod 19 moves parallel to the track and about axis 17 which is near fixed end 12 under the action of a rotatable rod 20 to which it is attached by wires 20'. Glazing frame 18 may support glass (not shown) that admits radiant solar energy from the sun while providing relatively high thermal resistance to the flow of heat from the inside of the house to the outside. As shown, the collector 22 is flat, but it may be in a cylindrical trough having reflecting ends or in a pocket of inverted U-shaped cross section to help reduce heat loss. Details of collector 22, the specific means for supporting it, and of the motor for driving the rod 20 are not a part of the invention and have been omitted to avoid obscuring the principles of the invention.

There has been described novel apparatus for significantly increasing the efficiency of a solar energy collection system, which apparatus is reliable,' relatively inexpensive and relatively free from complexity. While the sheet of substantially parabolic cross section is presently preferred, the principles of the invention are applicable to other curved sheets. For example, the section of the reflecting sheet might be an arc of an ellipse, circle, hyperbola or other curve having the property of focusing incident radiant energy on or in the vicinity of a collector such that the collector receives a greater intensity of radiant energy through the focusing effect of the reflecting sheet than if exposed to direct radiant energy alone. Many different reflecting materials may be used, and a wide variety of means employed for moving the movable end of the reflecting sheet to focus significant amounts of radiant energy on the collector as the relative position between sun or other radiant energy source and reflector changes.

- 10 -

CLAIMS

1.    Radiant energy focusing apparatus comprising a reflector (6) having a curved cross-section for focusing incident radiant energy upon an elongate radiant energy collecting region (22) characterized in that one edge (12) of the reflector (6) is fixedly supported relative to the collecting region (22), and the other edge (19) of the reflector is supported for movement about an axis (17) substantially parallel to the collecting region (22), for focusing radiant energy from a remote radiant energy source on the collecting region (22) as the relative angular orientation of the remote radiant energy source about the axis (17) changes.

2.    Radiant energy focusing apparatus according to claim 1, characterized in that the reflector is substantially parabolic so that the reflector (6) has an elongate focal region embracing the collecting region (22).

3.    Radiant energy focusing apparatus according to claim 1 or claim 2 characterised in that the other edge (19) is arranged to be moved substantially along the arc of a circle (18) having its center (17) near the fixed edge (12).

4.    Radiant energy focusing apparatus according to any of claims 1 to 3, which includes collecting means in the collecting region (22) for collecting the radiant energy focused thereon by the reflector (6); radiant energy sensing means (21) at the collecting region (22) responsive to incident radiant energy focused thereon by the reflector (6) for providing a control signal, and positioning means (20) responsive to the control signal for moving the movable edge (19) to reposition the reflector (6) for increasing the radiant energy focused on the collecting region (22) by the reflector (6) in response to a change in the angular orientation of the source.

5.    Radiant energy focusing apparatus according to claim 4, characterized in that the positioning means (20) comprises an electric motor and means (20') for coupling the motor to the movable edge (19) to move the reflector (6) through a sequence of positions.

0024177

1/3

FIG. 1

FIG. 2

FIG. 3

FIG. 4

$$y^2 = 4ax$$

FIG. 5

$$y^2 = 4ax$$

FIG. 6

(0,0)

$\theta$

(a,o)

7    8

x

12

($x_1$, $y_1$)

(P,q)

17

−y

L    11

L    6

15

L    13    14

16

## FIG. 7

0    .1    .2    .3    P

−.1

$\theta$=10

$\theta$=20

−.2

$\theta$=30

−.3

$\theta$=50

−.4

$\theta$=70

q

−.5

$y^2 = x$

L=0

L=0.5

L=1

$\theta$=90

L=2

−.6

L=3

## FIG. 8

22

x x x x x x x x

21

20

12

17

6

19

18

## FIG. 9

FIG. 10

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| | US - A - 4 015 585 (FATTOR)<br>* column 4, line 54 to column 5, line 31; column 5, lines 10 to 12; fig. 5, position 74 * | 1,2,5 |
| | FR - A1 - 2 308 066 (BERNARD)<br>* complete document * | 1,2,5 |
| | US - A - 4 089 323 (TRIHEY)<br>* complete document * | 4 |
| P,A | DE - A1 - 2 824 494 (KÖSTER)<br>* page 7, paragraph 5 to page 8, paragraph 1 * | 1,2 |

### CLASSIFICATION OF THE APPLICATION (Int. Cl.3)

F 24 J   3/02

G 02 B   5/10

### TECHNICAL FIELDS SEARCHED (Int.Cl.3)

F 24 J   3/00

G 02 B   5/00

G 02 B   17/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 05-11-1980 | PIEPER |

EPO Form 1503.1   06.78